# EUROPÄISCHE PATENTSCHRIFT

(11) **EP 2 156 918 B1**
(45) Veröffentlichungstag und Bekanntmachung des Hinweises auf die Patenterteilung: **06.07.2011**
(21) Anmeldenummer: 08405198.6
(22) Anmeldetag: 21.08.2008
(51) Int. Cl.: B23K 26/04

(54) **Verfahren zum Justieren einer Laserbearbeitungsanlage**
Method for adjusting a laser processing device
Procédé d'ajustement d'une installation de traitement au laser

(43) Veröffentlichungstag der Anmeldung: 24.02.2010
(73) Patentinhaber: Bystronic Laser AG, CH-3362 Niederönz (CH)
(72) Erfinder: Broger, David, 3400 Burgdorf (CH)
(74) Vertreter: EGLI-EUROPEAN PATENT ATTORNEYS

(56) Entgegenhaltungen:
- EP-A- 1 803 523
- US-A- 5 011 282
- US-A- 5 536 916

## Beschreibung

Die Erfindung bezieht sich auf ein Verfahren zur Justierung eines Strahlengangs einer Laserbearbeitungsanlage gemäß dem Oberbegriff des Anspruch 1. Ein solches Verfahren ist aus der US 5 011 282 A bekannt. Derartige Laserbearbeitungsanlagen werden beispielsweise zur Bearbeitung von Werkstücken mit einem Laserstrahl eingesetzt.

Vorrichtungen und Verfahren zum Justieren des Strahlengangs von Laserbearbeitunsanlagen sind beispielsweise aus dem Dokument US20020108939 bekannt. Dabei wird ein Sensor, bestehend aus gitterförmig angeordneten Messdrähten, so positioniert, dass ein in seiner Position zu bestimmender Laserstrahl auf dem Sensor auftrifft. Der Laserstrahl erwärmt die Messdrähte, wodurch sich deren elektrischer Widerstand verändert. Durch eine Messung der Widerstandsänderung an den Messdrähten lässt sich die Position des Laserstrahls bestimmen.

Während der Bearbeitung der Werkstücke überwacht ein Signalprozessor die Position des Laserstrahls auf dem Sensor. Die Position des Laserstrahls kann sich durch Temperaturunterschiede (bspw. hervorgerufen durch Abwärme einer Laserstrahlquelle oder Zugluft, welche sich auf die mechanischen Elemente der Laserbearbeitungsanlage in Form von Längenausdehnung auswirken) verändern. Der Signalprozessor ist durch eine Steuerung mit Aktoren an einem Spiegel verbunden. Durch die Aktoren kann die Lage des Spiegels in der Horizontalen und der Vertikalen verändert werden, sodass die Position des Laserstrahls entsprechend veränderbar ist. Die Aktoren werden während der Bearbeitung der Werkstücke so verändert, dass der Laserstrahl immer möglichst im Zentrum des Sensors auftrifft.

Bei der Vorrichtung wird ausschliesslich die Position des Laserstrahls auf dem Sensor ermittelt. Der Winkel, in welchem der Laserstrahl auf den Sensor oder eine Fokussierlinse auftrifft, kann nicht festgestellt werden. Somit kann eine Abweichung von der Parallelität einer Achse (Ausbreitungsrichtung) des Laserstrahls und einer Bewegungsachse des Bearbeitungskopfs nicht erfasst werden. Bei Abweichungen von der Achsenparallelität trifft der Laserstrahl nicht senkrecht und/oder nicht im Zentrum auf die Fokussierlinse. Dies führt zu einer lateralen Verschiebung des Fokuspunktes, wodurch keine optimale Schnittkante an dem zu bearbeitenden Werkstück entsteht.

Der vorliegenden Erfindung liegt die Aufgabe zugrunde, die genannten Nachteile zu vermeiden und ein Verfahren zur Justierung einer Laserbearbeitungsanlage zu zeigen, welche es ermöglicht, mit einfachen Mitteln den Strahlengang der Laserbearbeitungsanlage so zu justieren, dass keine unerwünschte lateral Verschiebung des Fokuspunktes bei der Bearbeitung eines Werkstücks resultiert.

Diese Aufgabe wird gelöst durch ein Verfahren mit den Merkmalen des Patentanspruchs 1.

Das Verfahren dient zum Justieren des Strahlengangs in einer Laserbearbeitungsanlage, wobei diese mindestens eine Laserquelle, einen Bearbeitungskopf, welcher entlang mindestens einer Bewegungsachse verfahrbar ist und mindestens ein justierbares Ablenkelement, welches den Laserstrahl von der Laserquelle zum verfahrbaren Bearbeitungskopf lenkt, umfasst. In dem Verfahren wird die Position des Bearbeitungskopfs entlang der jeweiligen Bewegungsachse relativ zu dem mindestens einen justierbaren Ablenkelement verändert, wobei mindestens ein Messkörper in einem Abschnitt des Strahlengangs ortsfest zum Bearbeitungskopf angeordnet ist und für mindestens zwei Positionen des Bearbeitungskopfes die jeweilige Position des Laserstrahls relativ zum Messkörper erfasst wird und aus den erfassten Positionen des Laserstrahls eine Abweichung zwischen einer Richtung der jeweiligen Bewegungsachse und der Richtung des Laserstrahls in einem Abschnitt des Strahlengangs ermittelt wird und mindestens eines der justierbaren Ablenkelemente derart justiert wird, dass die Abweichung einen vorbestimmten Wert unterschreitet.

Durch die Erfassung der Position des Laserstrahls an mehreren Positionen entlang einer Bewegungsachse kann ein Profil der Abweichung zwischen der jeweiligen Bewegungsachse und der Richtung des Laserstrahls ermittelt werden. Durch Justieren der Ablenkelemente kann diese Abweichung reduziert werden. Angestrebt wird dabei, dass der Laserstrahl unabhängig von der Position des Bearbeitungskopfs immer senkrecht im Zentrum der Fokussierlinse auftrifft, so dass keine unerwünschte lateral Verschiebung des Fokuspunktes resultiert und eine optimale Schnittkante am Werkstück entsteht.

In einer Ausführungsform wird die Position des Laserstrahls mit mindestens einem der Messkörper am Bearbeitungskopf und/oder an mindestens einem Ablenkelement und/oder an mindestens einem transmissiven Element, vorzugsweise einer Linse oder einem Fenster, erfasst.

Die Abweichung zwischen einer Richtung der Bewegungsachse und der Richtung des Laserstrahls kann in verschiedenen Abschnitten des Strahlengangs erfasst werden. Bei der Erfassung der Position des Laserstrahls in verschiedenen Abschnitter kann der Laserstrahl durch Justieren der einzelnen Ablenkelemente präziser in jedem Abschnitt des Strahlengangs justiert werden. Der Strahlengang umfasst die Strecke von der Erzeugung des Laserstrahls in der Laserquelle bis zum Werkstück oder dem Ort, an welchem ein Werkstück bearbeitet werden kann. Beispielsweise durch Ablenkelemente oder transmissive Elemente wird der Strahlengang des Laserstrahls in verschiedene Abschnitte unterteilt.

Der Messkörpe wird durch Einwirkung des Laserstrahls deformiert und die Deformation mit Sensoren, vorzugsweise mit Dehnmessstreifen, erfasst.

Durch die Einwirkung des Laserstrahls wird in Abhängigkeit der räumlichen Verteilung der Intensität des Laserstrahls der Messkörper deformiert. Beispielsweise mit Dehnmessstreifen kann die Deformation ortsabhängig erfasst werden. Mit einer Auswerteeinheit wird der Ort auf dem Messkörper bestimmt, an welchem die Deformation maximal ist. Dieser Ort der maximalen Deformation entspricht der Position des Laserstrahls auf dem Messkörper. An dem Messkörper entstehen keine dauerhaften Veränderungen, somit kann mit einem derartigen Messkörper die Position des Laserstrahls beliebig oft bestimmt werden. Der Messkörper kann dabei ein transmissives Element, wie beispielsweise eine Linse, ein Fenster oder ein teildurchlässiger Spiegel, sein. Auch ist es möglich, ein Ablenkelement wie beispielsweise einen Spiegel oder ein den Laserstrahl absorbierendes Element zu verwenden.

In einer weiteren Ausgestaltung wird an zwei Extrempositionen, des Bearbeitungskopfs bezüglich einer der Bewegungsachsen, die Position des Laserstrahls erfasst und/oder die ermittelte Abweichung zwischen der Richtung der jeweiligen Bewegungsachse und der Richtung des Laserstrahls in dem Abschnitt des Strahlengangs gespeichert und/oder aufgezeichnet.

Zur Bestimmung der Abweichung zwischen der Richtung des Laserstahls und der Bewegungsachsen des Bearbeitungskopfs muss an mindestens zwei Positionen pro Bewegungsachse des Bearbeitungskopfs die Position des Laserstrahls bestimmt werden. Aus dem Vergleich der Positionen des Laserstrahls auf dem Messkörper, jeweils gemessen für verschiedene Positionen des Bearbeitungskopfs, lässt sich die Richtung des Laserstrahls und somit die Abweichung von der Achsenparallelität bestimmen.

In einer weiteren Ausführungsform sind die justierbaren Ablenkelemente kardanisch gelagert und werden mit mechanischen Justiermitteln und/oder mit Aktoren justiert.

Die kardanische Lagerung der Ablenkelemente lässt ein Justieren der Spiegel in jeweils zwei Achsen zu. Die Justierung kann dabei manuell beispielsweise mit Schraubgewinden oder mittels Aktoren - wie beispielsweise Piezoelementen - erfolgen. Es ist auch denkbar, dass beispielsweise manuell eine Grobjustierung und mit den Aktoren eine Feinjustierung der Achsenparallelität erfolgt. Die Justierung erfolgt nach den Grundsätzen der Trigonometrie, wonach sich beim Verändern des Winkels in einer bestimmten Entfernung zum Ausgangspunkt eine bestimmte Abweichung des Strahlengangs ergibt.

In einer weiteren Ausgestaltung wird die Abweichung von der Achsenparallelität in einer Auswerteeinheit ermittelt und die Auswerteeinheit gibt Werte für die Korrektur der justierbaren Ablenkelemente aus.

Die Auswerteeinheit berechnet die Korrekturwerte und gibt diese aus. Die Korrekturwerte können dann beispielsweise von einer Wachperson an den justierbaren Ablenkelementen eingestellt werden.

In einer besonders vorteilhaften Ausgestaltung gibt die Auswerteeinheit die ermittelten Korrekturwerte an eine Steuerung aus und die justierbaren Ablenkelemente werden durch die Steuerung automatisch derart korrigiert, dass die Abweichung von der Achsenparallelität den vorbestimmten Wert unterschreitet.

Durch die Steuerung können justierbare Ablenkelemente mit Aktoren in der Laserbearbeitungsanlage automatisch justiert werden. Die Laserbearbeitungsanlage kann somit auch während der Bearbeitung eines Werkstückes justiert werden. Dies ist ein besonderer Vorteil, da je nach Leistung des Laserstrahls die verwendeten mechanischen Elemente sich unterschiedlich ausdehnen und es somit während des Betriebs zu Veränderungen in der Achsenparallelität kommen kann.

In einer weiteren Ausgestaltung wird die Laserbearbeitungsanlage während einer Endkontrolle und/oder einer Inbetriebnahme und/oder einer periodischen Prüfung und/oder vor oder während der Bearbeitung eines Werkstücks justiert.

Durch die Justierung der Laserbearbeitungsanlage soll eine präzise Bearbeitung von Werkstücken und eine optimale Schnittkante erreicht werden. Die Justierung der Laserbearbeitungsanlage kann zu einem beliebigen Zeitpunkt vor der Bearbeitung eines Werkstückes erfolgen. Es ist auch möglich, die Laserbearbeitungsanlage während des Bearbeitungsprozesses von Werkstücken zu justieren.

Weitere Einzelheiten der Erfindung und insbesondere beispielhafte Ausführungsformen der erfindungsgemässen Vorrichtung und des erfindungsgemässen Verfahrens werden im Folgenden anhand der beigefügten Zeichnungen erläutert. Es zeigen:
- Fig. 1: eine perspektivische Darstellung einer ersten Aus- führungsform zur Anwendung des erfindungsgemässen Verfahrens zur Justierung einer Laserbearbeitungs- anlage;
- Fig. 2: eine perspektivische Darstellung eines Bearbei- tungskopfs an einer Minimalposition und einer Ma- ximalposition auf der Bewegungsachse, wobei eine Winkelabweichung besteht;
- Fig. 3: wie Fig. 2 mit einer Deformation in der Bewegungs- achse;
- Fig. 4: eine Fahrkurve des Bearbeitungskopfs, wobei eine Bewegungsachse des Bearbeitungskopfs deformiert ist und eine Winkelabweichung zwischen dem Laser- strahl und zwei weiteren Bewegungsachsen des Bear- beitungskopfes besteht;
- Fig. 5: Grafische Darstellung der Abweichung zwischen dem Laserstrahl und den Bewegungsachsen für die Fahr- kurve gemäss Fig. 4;
- Fig. 6: wie Fig. 5, jedoch nach dem Justieren der Ablenk- elemente;
- Fig. 7: eine Seitenansicht eines transmissiven Elementes zur Fokussierung eines Laserstrahls mit Sensoren zur Erfassung der Position des Laserstrahls;
- Fig. 8: eine Seitenansicht eines Ablenkelementes mit Sen- soren zur Erfassung der Position des Laserstrahls;
- Fig. 9: eine perspektivische Darstellung eines kardanisch gelagerten Ablenkelements mit mechanischen Jus- tiermitteln;
- Fig. 10: eine Seitenansicht eines Ablenkelements gemäss Fig. 9 mit Sensoren zur Erfassung der Position des Laserstrahls, mechanischen Justiermitteln und Ak- toren;
- Fig. 11: eine Frontansicht eines Messkörpers mit einer durch den Laserstrahl erzeugten Deformation;
- Fig. 12: eine perspektivische Detaildarstellung eines Bear- beitungskopfs mit mehreren Messkörpern zur Positi- onserfassung des Laserstrahls;
- Fig. 13: wie Fig. 1 mit einer Steuereinheit zur Justierung der Ablenkelemente mit Aktoren.

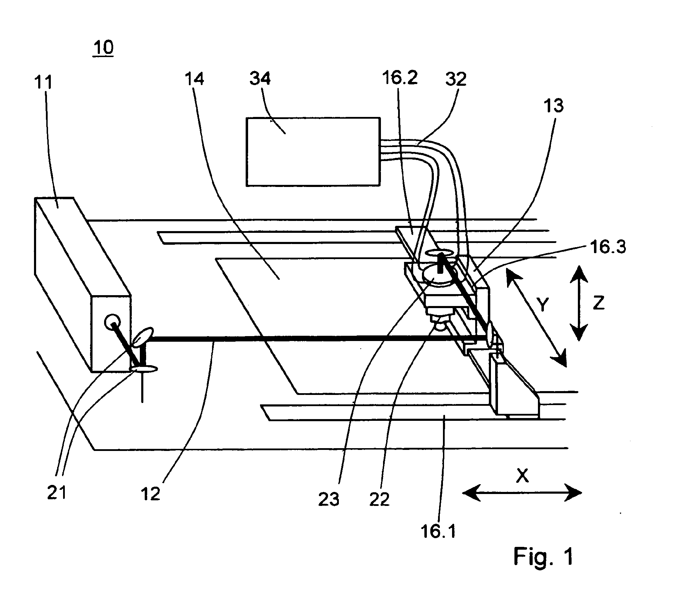

Figur 1 zeigt eine Laserbearbeitungsanlage 10 mit einer Laserquelle 11, einem verfahrbaren Bearbeitungskopf 13 und justierbaren Ablenkelementen 21, welche einen Laserstrahl 12 von der Laserquelle 11 zum Bearbeitungskopf 13 lenken. Der Bearbeitungskopf 13 kann entlang der Bewegungsachse 16.1, welche in einem Koordinatensystem der X-Achse entspricht und 16.2, welche der Y-Achse entspricht, bewegt werden. Ebenfalls gezeigt in Figur 1 ist die Bewegungsachse 16.3, welche der Z- Achse in einem Koordinatensystem, in welchem die Achsen senkrecht zueinander liegen, entspricht.

Mit einem Messkörper 23, welcher auf dem Bearbeitungskopf 13 platziert ist, kann die Position des Laserstrahls 12 bestimmt werden. Die Position des Laserstrahls 12 wird in Abhängigkeit der Position, an welcher sich der Bearbeitungskopf 13 aktuell entlang der Bewegungsachse 16.1, 16.2 und 16.3 befindet, ermittelt. Bedingt beispielsweise durch De-Justage, mechanische Unebenheiten oder Deformationen in einer Bewegungsachse 16.1, 16.2, 16.3 des Beerbeitungskopfs 13 kann es zu einer Abweichung zwischen der Richtung des Laserstrahls 12 und den Bewegungsachsen 16.1, 16.2, 16.3 des Bearbeitungskopfs 13 kommen. Diese Abweichung wird für einzelne Abschnitte des Strahlengangs ermittelt. Die Richtung des Laserstrahls 12 sollte dabei immer parallel zu den jeweiligen Bewegungsachsen 16.1, 16.2, 16.3 des Bearbeitungskopfes 13 und ohne Abweichung verlaufen. Wenn diese Bedingung erfüllt ist, besteht eine Achsenparallelität zwischen dem Laserstrahl 12 und der Bewegungsachse 16.1, 16.2, 16.3.

Die Position des Laserstrahls 12 kann in verschiedener Weise bestimmt werden. So zum Beispiel durch einen Messkörper 23, welcher durch die thermische Einwirkung eines Laserstrahls 12 lokal eine Ausdehnung erfährt. Der Messkörper 23 wird dabei abhängig von der Position des Laserstrahls 12 auf dem Messkörper 23 deformiert. Diese Deformation kann mit Sensoren, beispielsweise mit Dehnmessstreifen, welche am Rand des Messkörpers 23 befestigt sind, erfasst und über Messkabel 32 an eine Auswerteeinheit 34 weitergeleitet werden. Die Auswerteeinheit 34 bestimmt den Punkt der maximalen Deformation auf dem Messkörper 23. Dieser Punkt entspricht der Position des Laserstrahls 12. Eine weitere Möglichkeit, die Position eines Laserstrahls 12 zu bestimmen, besteht darin, in den Laserstrahl 12 einen Messkörper 23 zu platzieren, welcher sich bei Einwirkung des Laserstrahls 12 dauerhaft verändert. Diese Veränderung kann beispielsweise eine Vertiefung, die Bildung eines Lochs oder eine Schwärzung sein.

Die Auswerteeinheit 34 kann, in Abhängigkeit der Position des Messkörpers 23 und/oder des Bearbeitungskopfs 13, die Position des Laserstrahls 12 auf dem Messkörper 23 beispielsweise aufzeichnen oder speichern. Mit dieser Aufzeichnung oder den gespeicherten Messwerten ist es möglich, die justierbaren Ablenkelemente 21 derart zu korrigieren, dass die Abweichung in der Achsenparallelität einen vorbestimmten Wert unterschreitet.

Der Messkörper 23 kann an verschiedenen Abschnitten des Strahlengangs in der Laserbearbeitungsanlage 10 positioniert werden. So zum Beispiel am Bearbeitungskopf 13 oder an einem der Ablenkelemente 21, welche den Laserstrahl 12 bis zum Werkstück 14 weiterleiten. Der Messkörper 23 kann dabei in der Laserbearbeitungsanlage 10 temporär während der Justierung der Ablenkelemente 21 oder dauerhaft integriert werden.

Bei der Justierung der Laserbearbeitungsanlage 10 soll erreicht werden, dass der Laserstrahl 12 an jeder Position, an welche der Bearbeitungskopf 13 in der Laserbearbeitungsanlage 10 verfahren werden kann, senkrecht und im Zentrum der Fokussierlinse 22 auftrifft. Somit kann eine optimale Fokussierung des Laserstrahls 12 ohne unerwünschte lateral Verschiebung des Fokuspunktes erreicht werden. Das senkrechte Auftreffen des Laserstrahls 12, sowie das Auftreffen im Zentrum der Fokussierlinse 22, wird unter anderem durch eine Abweichung zwischen der Richtung der jeweiligen Bewegungsachse 16.1, 16.2, 16.3 und der Richtung des Laserstrahls 12 in einem Abschnitt des Strahlengangs beeinflusst.

Der Strahlengang der Laserbearbeitungsanlage muss insbesondere vor einem ersten Bearbeiten eines Werkstückes justiert werden. Aufgrund verschiedener Faktoren, wie beispielsweise Erschütterungen, Schläge, Verschmutzung, Verschiebungen oder thermische Ausdehnung, kann es zu einer Abweichung kommen. Dies kann eine Überprüfung der Abweichung von der Achsenparallelität und ein Justieren der Ablenkelemente 21 erfordern.

Die Laserbearbeitungsanlage 10 wird zur Bearbeitung von Werkstücken 14, beispielsweise zum Zuschneiden von Metallblechen, Bohren von Löchern oder zum Schweissen verwendet. Als Leserquellen 11 werden dabei meist CO2-Laser, wie beispielsweise der Bylaser 6000 von Bystronic verwendet.

Der Bearbeitungskopf 13, in welchem der Laserstrahl 12 gewöhnlich fokussiert wird, kann entlang einer der Bewegungsachsen 16.1, 16.2 und gegebenenfalls auch 16.3 verfahren werden. Es sind auch Laserbearbeitungsanlagen 10 bekannt, bei welchen der Bearbeitungskopf 13 beispielsweise nur in einer der beiden Bewegungsachsen 16.1 oder 16.2 verfahren werden kann. Bei diesen Laserbearbeitungsanlagen wird häufig das Werkstück 14 in der X-Achse und/oder Y-Achse des Koordinatensystems der Laserbearbeitungsanlage verschoben.

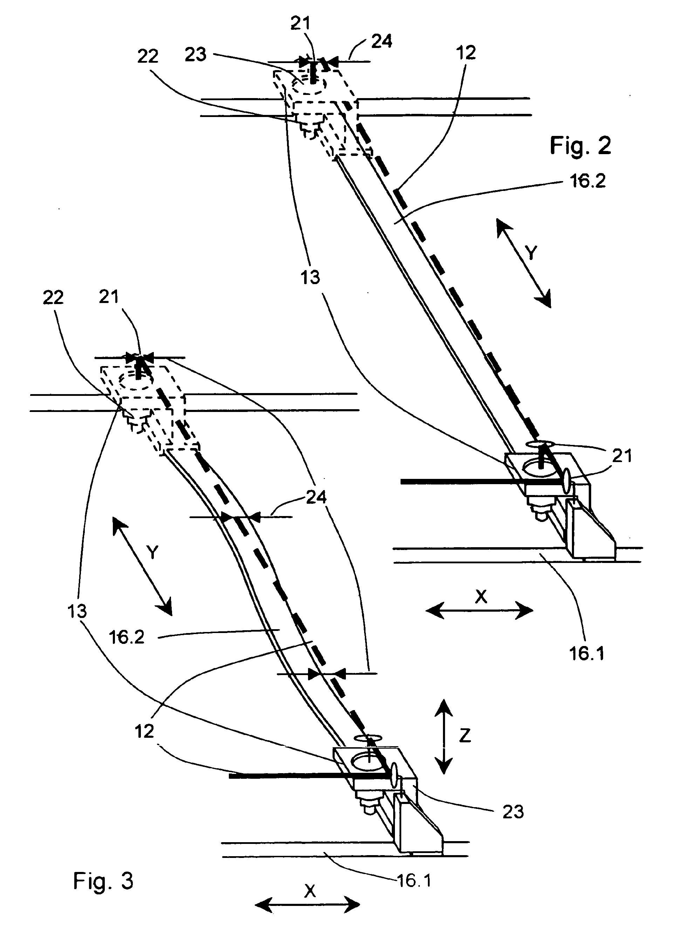

Figur 2 und 3 zeigen je verschiedene Formen von Abweichungen 24 zwischen der Richtung der Bewegungsachse 16.2 und der Richtung des Laserstrahls 12. In beiden Figuren ist ein Bearbeitungskopf 13 einer Laserbearbeitungsanlage 10, welcher auf der Bewegungsachse 16.2 bewegt wird, gezeigt. Der Bearbeitungskopf 13 befindet sich dabei in zwei Extrempositionen, einer Minimalposition (durchgezogene Linie in Fig. 2 bzw. 3) und einer Maximalposition (gestrichelte Linie in Fig. 2 bzw. 3), auf der Bewegungsachse 16.2. Die Bewegungsachse 16.2 des Bearbeitungskopfs 13 und die Richtung des Laserstrahls 12 sind in den Figuren jeweils nicht parallel zueinander.

In Figur 2 besteht eine Winkelabweichung. Dies bedeutet, dass beispielsweise an der Minimalposition des Bearbeitungskopfs 13 auf der Bewegungsachse 16.2 der Laserstrahl 12 im Zentrum des Ablenkelements 21 auftrifft und sich mit zunehmender Entfernung des Bearbeitungskopfs 13 von der Minimalposition die Position des Laserstrahls 12 vom Zentrum des Ablenkelements 21 entfernt. An der Maximalposition des Bearbeitungskopfs 13 auf der Bewegungsachse 16.2 ist die Differenz zwischen dem Zentrum des Ablenkelements 21 und der Position des Laserstrahls 12 am grössten. Die Winkelabweichung kann durch Anfahren der Extrempositionen des Bearbeitungskopfs 13 auf der Bewegungsachse 16.2 am präzisesten ermittelt werden. Durch Justieren der Ablenkeiemente 21 kann eine Winkelabweichung relativ gut unter einen vorbestimmten Wert korrigiert werden.
Figur 3 zeigt eine Deformation der Bewegungsachse 16.2 des Bearbeitungskopfs 13. Bei einer Deformation kann die Richtung der Bewegungsachse 16.2 des Bearbeitungskopfs 13 in beliebiger Art, beispielsweise in Form einer Krümmung oder sonstigen Unebenheiten, von der Richtung des Laserstrahls 12 abweichen. Abhängig vom Verlauf der Deformation ist die Korrektur einer Abweichung 24 mit den Ablenkelementen 21 oft nicht vollständig möglich.

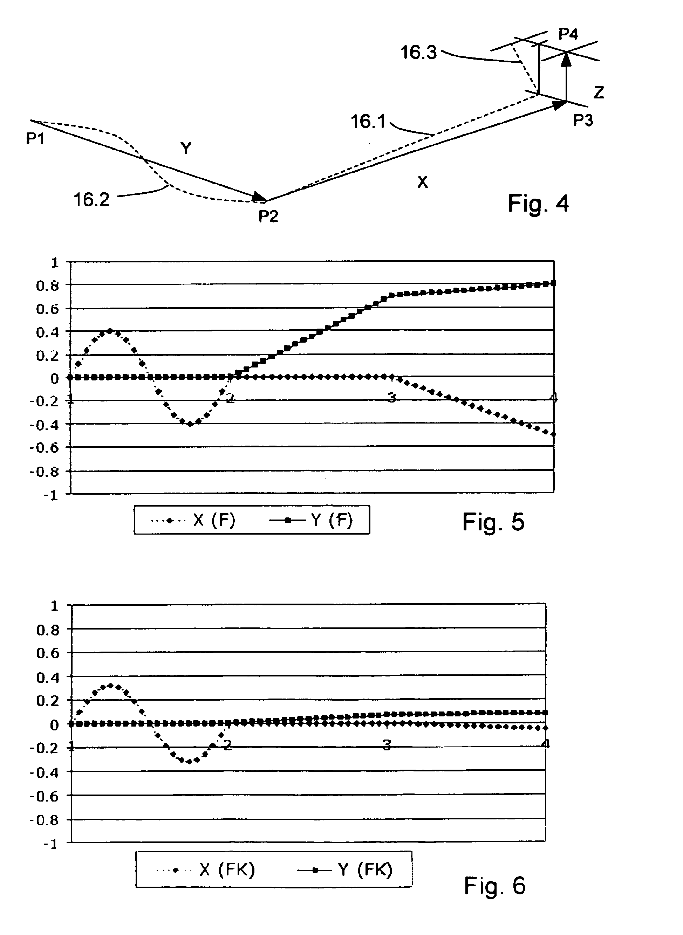

Figur 4 zeigt eine Fahrkurve eines Bearbeitungskopfes entlang der Bewegungsachsen 16.1, 16.2, 16.3. Dabei wird jeweils die Minimalposition und die Maximalposition des Bearbeitungskopfs auf jeder der Bewegungsachsen 16.1, 16.2, 16.3 angefahren. Der Bearbeitungskopf bewegt sich somit entlang einer Umgrenzung seiner Arbeitsfläche. Die gestrichelte Linie zeigt dabei die Bewegungsachse 16.1, 16.2, 16.3 des Bearbeitungskopfs, während die durchgezogene Linie die Richtung des Laserstrahls zeigt.
Figur 5 zeigt eine grafische Darstellung der Abweichung von der Achsenparallelität aus Figur 4. Die Bewegungsachse 16.2 des Bearbeitungskopfs 13 ist dabei sinusförmig deformiert.
Dies wird durch Erfassen der Position des Laserstrahls 12 in Abhängigkeit von der Position des Bearbeitungskopfs 13 auf der Bewegungsachse 16.2 an mehreren Positionen zwischen den Punkten P1 und P2 aufgezeigt. Zwischen den Punkten P2 und P3 bewegt sich der Bearbeitungskopf 13 entlang der Bewegungsachse 16.1 und zwischen den Punkten P3 und P4 entlang der Bewegungsachse 16.3. Dabei wird wiederum an verschiedenen Positionen der Bewegungsachse 16.1, 16.3 des Bearbeitungskopfs 13 die genaue Position des Laserstrahls 12 erfasst.
Figur 6 zeigt die Abweichung zwischen der jeweiligen Bewegungsachse 16.1, 16.2, 16.3 und dem Laserstrahl nach dem Justieren der Ablenkelemente 21. Dabei ist zu erkennen, dass die Winkelabweichung zwischen P2 und P3 sowie P3 und P4 deutlich reduziert werden konnte, während die Abweichung aufgrund der Deformation der Bewegungsachse 16.2 nur gering reduziert werden konnte.

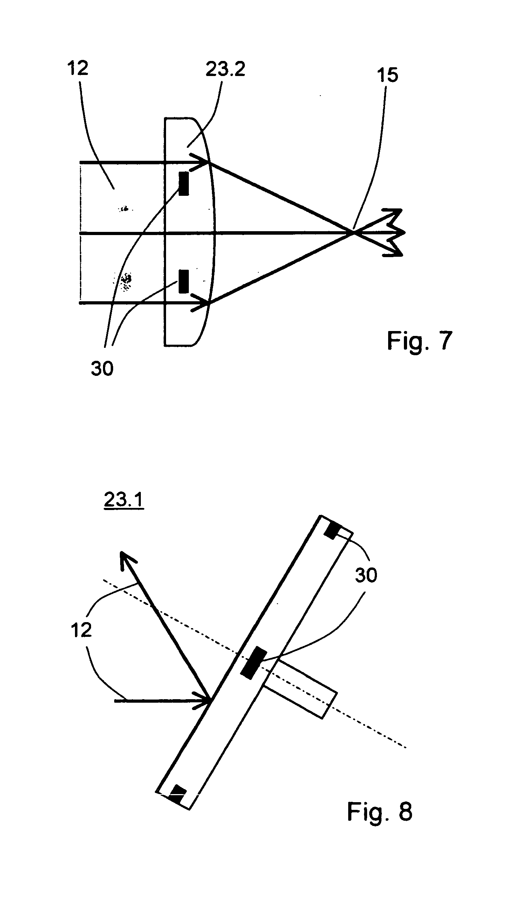

Figur 7 zeigt einen Messkörper in Form eines transmissiven Elements 23.2. Transmissive Elemente 23.2 wie beispielsweise Fenster, Linsen, Fokussierlinsen oder dichroitische- oder teildurchlässige Spiegel, werden in der Lasertechnik häufig eingesetzt. Sie ermöglichen beispielweise das Auskoppeln des Laserstrahls 12 beziehungsweise eines Teils des Laserstrahls 12 oder fokussieren den Laserstrahl 12 in einen Punkt 15. An der Mantelfläche der transmissiven Elemente 23.2 könne beispielsweise Sensoren 30, insbesondere Dehnmessstreifen, befestigt werden, welche eine Deformation des transmissiven Elements 23.2 erfassen.
Figur 8 zeigt ein Ablenkelement 23.1 als Messkörper zur Erfassung der Position des Laserstrahls 12. Um beispielsweise die Abweichung einer der Bewegungsachsen 16.1, 16.2, 16.3 und des Laserstrahls 12 in einem Abschnitt des Strahlengangs zwischen zwei Ablenkelementen 23.1 zu bestimmen, kann ein Ablenkelement 23.1 als Messkörper verwendet werden. Dabei wird die Position des Laserstrahls 12 auf dem Ablenkelement 23.1 beispielsweise wiederum durch Erfassen der Deformation des Messkörpers 23.1 mittels Sensoren 30 bestimmt.

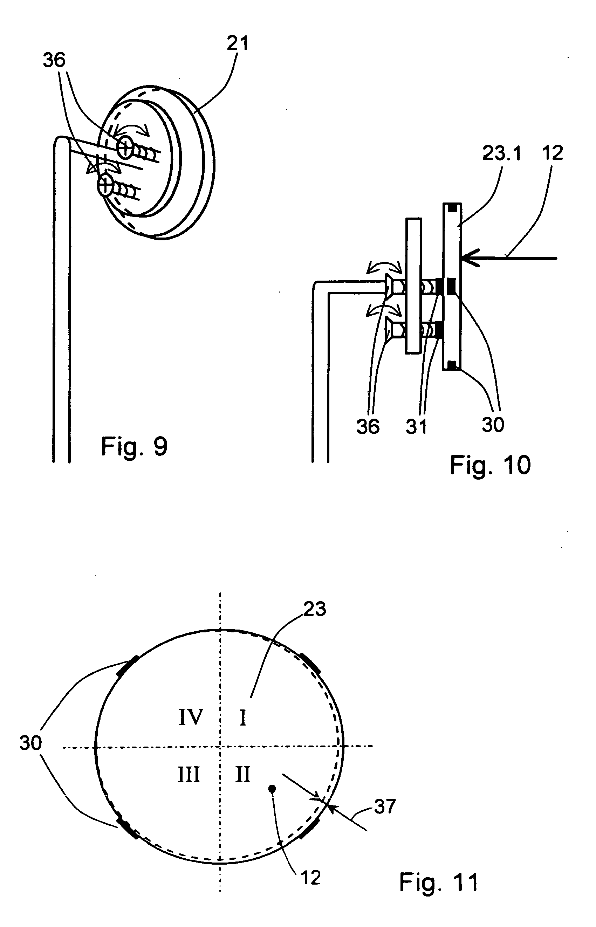

Figur 9 zeigt ein justierbares Ablenkelement 21, welches kardanisch gelagert ist. Das Ablenkelement 21 kann mit mechanischen Justiermitteln 36 in zwei Achsen geneigt werden. Es ist auch möglich, dass das justierbare Ablenkelement 21 zusätzlich vor und zurück und/oder horizontal und/oder vertikal bewegbar ist. Bei dem in Figur 9 gezeigten Ablenkelement 21 erfolgt die Justierung mechanisch, beispielsweise durch Schrauben.
Figur 10 zeigt ein justierbares Ablenkelement, welches zusätzlich als Messkörper 23.1 für die Erfassung der Position des Laserstrahls 12 genutzt werden kann. Dabei sind am Ablenkelement 23.1 Sensoren 30 für die Bestimmung der Position des Laserstrahls 12 befestigt. Zusätzlich sind Aktoren 31 zur Justierung des Ablenkelements 23.1 im Laserstrahl 12 angeordnet. Dabei können Aktoren 31 für alle in Figur 9 beschriebenen Achsen und Bewegungsrichtungen des Ablenkelements 23.1 vorgesehen werden. Auch ist es möglich, nebst oder anstelle der Aktoren 31 mechanische Justiermittel 36 vorzusehen.
Figur 11 zeigt den Messkörper 23, welcher durch die Einwirkung des Laserstrahls 12 deformiert ist, in einer Frontansicht. Die Ausbreitungsrichtung des Laserstrahls 12 liegt in der Betrachtungsrichtung. Die gestrichelte Linie zeigt den Messkörper 23 in einem ersten Zustand ohne Einwirkung eines Laserstrahls 12. Die durchgezogene Linie zeigt den Messkörper 23 in einem zweiten Zustand unter Einwirkung des Laserstrahls 12. Als Deformation 37 wird der Unterschied zwischen diesen beiden Zuständen bezeichnet. Der Laserstrahl 12 trifft den Messkörper 23 im II-Quadrant. Dies führt an der Mantelfläche des Messkörpers 23 zu einer Deformation 37. In dieser Darstellung wird sichtbar, dass die Deformation der Mantelfläche abhängig ist von der Position des Laserstrahls 12. Besonders ausgeprägt ist die Deformation 37 im II-Quadranten. Der I- und III-Quadrant erfahren an der Mantelfläche eine etwa gleich starke Deformation 37. Am geringsten ist die Deformation 37 im IV-Quadranten. In bestimmten Fällen kann gar eine negative Deformation 37 resultieren.

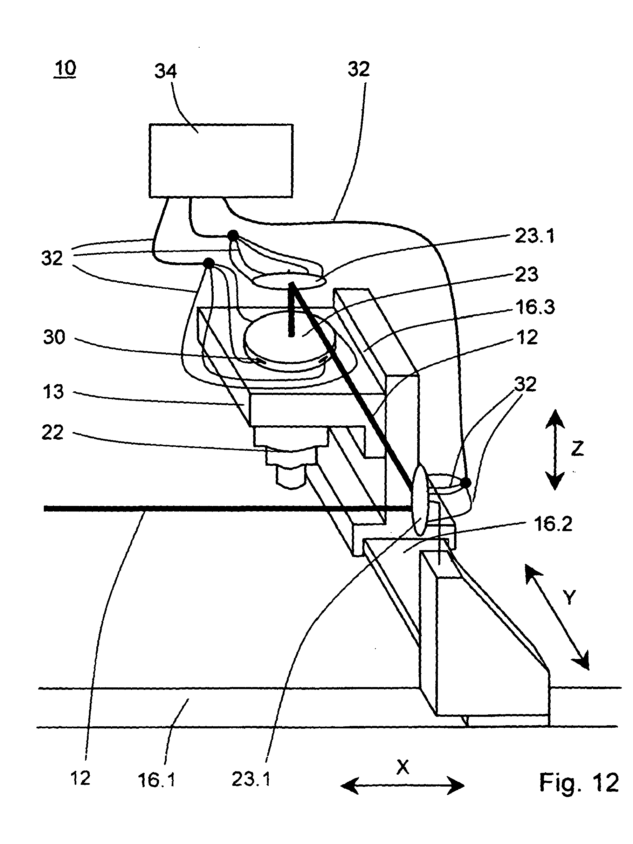

Figur 12 zeigt eine Laserbearbeitungsanlage 10 mit einer Auswerteeinheit 34. Es sind mehrere Messkörper 23, 23.1 an der Laserbearbeitungsanlage 10 angeordnet. Somit kann die Position des Laserstrahls 12 in den einzelnen Abschnitten des Strahlengangs erfasst werden. Die Abweichung kann auch in mehreren Auswerteeinheiten 34 oder beispielsweise am Messkörper 23 oder an einem der Ablenkelementen 23.1 als Messkörpern ermittelt werden.

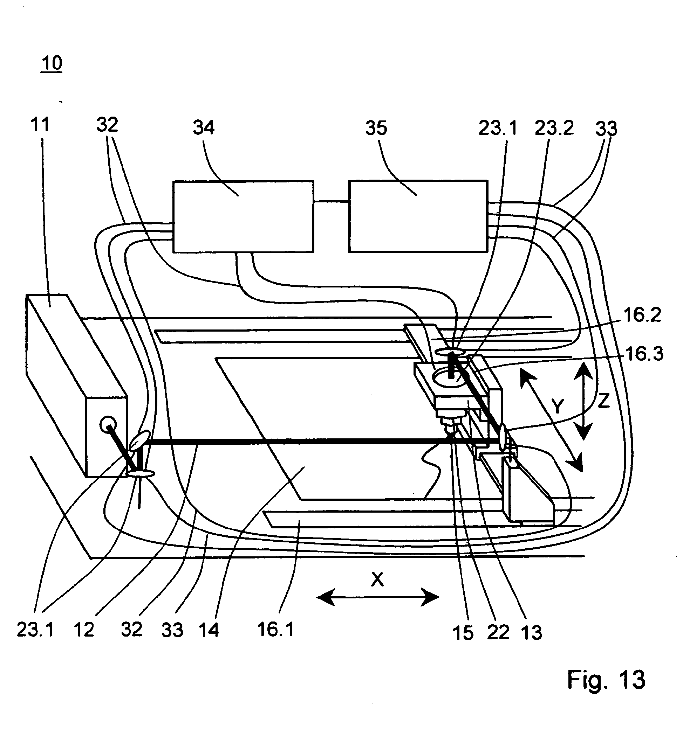

Figur 13 zeigt eine Laserbearbeitungsanlage 10 wie Figur 1, mit Ablenkelementen 23.1 als Messkörpern und ein transmissives Element 23.2. Wie bereits in vorhegenden Figuren gezeigt wurde, dienen die Ablenkelemente 23.1 und das transmissives Element 23.2 als Messkörper. Die von den Sensoren der Messkörper erfassten Werte werden über Messkabel 32 in der Auswerteeinheit 34 erfasst. Die Auswerteeinheit 34 ermittelt die Abweichung und ist mit einer Steuerung 35 verbunden. Die Steuerung 35 steuert über Steuerkabel 33 die Aktoren an mindestens einem Ablenkelement 23.1 derart, dass die Abweichung zwischen der Richtung der jeweiligen Bewegungsachse 16.1, 16.2, 16.3 und der Richtung des Laserstrahls 12 in einem Abschnitt des Strahlengangs einen vorbestimmten Wert unterschreitet.

Diese Ausführungsform erlaubt die automatische Justierung der Position des Laserstrahls 12 während der Bearbeitung eines Werkstücks 14. Die Laserbearbeitungsanlage 10 kann somit beispielsweise auf Temperaturänderungen, welche während der Bearbeitung des Werkstücks 14 auftreten und die Achsenparallelität beeinflussen, reagieren. Dadurch ist gewährleistet, dass der Laserstrahl 12 immer optimal fokussiert wird, wodurch eine präzise Bearbeitung des Werkstückes 14 und eine optimale Schnittkante erreicht wird.

Durch diese automatische Justierung ist es auch möglich, Abweichungen von der Achsenparallelität, welche durch die Deformation einer Bewegungsachse 16.1, 16.2, 16.3 des Bearbeitungskopfs 13 entstehen, zu korrigieren, wodurch der Laserstrahl 12 immer senkrecht im Zentrum der Fokussierlinse 22 auftrifft.

Die Deformation der Messkörper ist abhängig vom Absorptionsgrad der Energie des Laserstrahls 12, d.h. dem Anteil der Energie, welche von dem Messkörper absorbiert wird. Der Absorptionsgrad der Messkörper ist so zu wählen, dass bei maximaler Arbeitsleistung des Laserstrahls 12 der Messkörper nicht zerstört wird und bei geringer Leistung des Laserstrahls 12 eine Deformation der Messkörper von den Sensoren erfasst werden kann.

## Patentansprüche

1. Verfahren zum Justieren eines Strahlengangs einer Laserbearbeitungsanlage (10), wobei die Laserbearbeitungsanlage (10)
● mindestens eine Laserquelle (11),
● einen Bearbeitungskopf (13), welcher entlang mindestens einer Bewegungsachse (16.1, 16.2, 16.3) verfahrbar ist, und
● mindestens ein justierbares Ablenkelement (21, 23.1), welches einen Laserstrahl (12) von der Laserquelle (11) zum Bearbeitungskopf (13) lenkt,
umfasst und das Verfahren die folgenden Schritte umfasst:
Verändern der Position des Bearbeitungskopfs (13) entlang der jeweiligen Bewegungsachse (16.1, 16.2, 16.3) relativ zu dem mindestens einen justierbaren Ablenkelement (21, 23.1),
wobei mindestens ein Messkörper (23, 23.1, 23.2) in einem Abschnitt des Strahlengangs ortsfest zum Bearbeitungskopf (13) angeordnet ist und für mindestens zwei Positionen des Bearbeitungskopfes (13) die jeweilige Position des Laserstrahls (12) relativ zum Messkörper (23, 23.1, 23.2) erfasst wird und
wobei aus den erfassten Positionen des Laserstrahls (12) eine Abweichung (24) zwischen einer Richtung der jeweiligen Bewegungsachse (16.1, 16.2, 16.3) und der Richtung des Laserstrahls (12) in einem Abschnitt des Strahlengangs ermittelt wird;
Justieren des mindestens einen justierbaren Ablenkelements (21, 23.1) derart, dass die Abweichung (24) einen vorbestimmten Wert unterschreitet, **dadurch gekennzeichnet, dass**
der Messkörper (23, 23.1, 23.2) durch Einwirkung des Laserstrahls (12) deformiert wird und die Deformation (37) mit Sensoren (30), vorzugsweise mit Dehnmessstreifen, erfasst wird.

2. Verfahren nach Anspruch 1, wobei die Position des Laserstrahls (12) mit dem Messkörper (23, 23.1, 23.2) am Bearbeitungskopf (13) und/oder an mindestens einem der Ablenkelemente (21, 23.1) und/oder an mindestens einem der transmissiven Elemente, vorzugsweise einer Linse oder einem Fenster (22, 23.2), erfasst wird.

3. Verfahren nach einem der Ansprüche 1 oder 2, wobei die Position des Laserstrahls (12) an zwei Extrempositionen des Bearbeitungskopfs (13) bezüglich der Bewegungsachse (16.1, 16.2, 16.3) erfasst wird.

4. Verfahren nach einem der vorstehenden Ansprüche, wobei die Position des Laserstrahls (12) und/oder die Abweichung (24) zwischen der Richtung der jeweiligen Bewegungsachse und der Richtung des Laserstrahls (12) in dem Abschnitt des Strahlengangs gespeichert und/oder aufgezeichnet wird.

5. Verfahren nach einem der vorstehenden Ansprüche, wobei das justierbare Ablenkelement (21, 23.1) kardanisch gelagert ist.

6. Verfahren nach Anspruch 5, wobei das justierbare Ablenkelement (21, 23.1) mit mechanischen Justiermitteln (36) und/oder mit Aktoren (31) justiert wird.

7. Verfahren nach einem der vorstehenden Ansprüche, wobei die Abweichung (24) in einer Auswerteeinheit (34) ermittelt wird und die Auswerteeinheit (34) Werte für die Korrektur des justierbaren Ablenkelements (21, 23.1) ausgibt.

8. Verfahren nach einem der vorstehenden Ansprüche, wobei die Auswerteeinheit (34) die ermittelten Korrekturwerte an eine Steuerung (35) ausgibt und das justierbare Ablenkelement (21, 23.1) durch die Steuerung (35) automatisch derart korrigiert werden, dass die Abweichung (24) den vorbestimmten Wert unterschreitet.

9. Verfahren nach einem der vorstehenden Ansprüche, wobei die Laserbearbeitungsanlage (10) während einer Endkontrolle und/oder einer Inbetriebnahme und/oder einer periodischen Prüfung und/oder vor oder während der Bearbeitung eines Werkstücks (14) justiert wird.

## Claims

1. A method for adjusting a laser beam path of a laser processing system (10), wherein the laser processing system (10) comprises
● at least one laser source (11)
● one processing head (13) which is movable along at least one axis of movement (16.1, 16.2, 16.3), and
● at least one adjustable deflecting element (21, 23.1) which deflects a laser beam (12) from the laser source (11) to the processing head (13),
and the method comprises the following steps:
Changing the position of the processing head (13) along the respective axis of movement (16.1, 16.2, 16.3) relative to the at least one adjustable deflecting element (21, 23.1),
wherein at least one measuring body (23, 23.1, 23.2) is arranged in a section of the beam path and is stationary with respect to the processing head (13), and for at least two positions of the processing head (13), the respective position of the laser beam (12) relative to the measuring body (23, 23.1, 23.2) is detected, and
wherein from the detected positions of the laser beam (12), a deviation (24) between a direction of the respective axis of movement (16.1, 16.2, 16.3) and the direction of the laser beam (12) in a section of the beam path is determined;
adjusting the at least one adjustable deflecting element (21, 23.1) in such a manner that the deviation (24) falls below a predetermined value, **characterized in that**
the measuring body (23, 23.1, 23.2) is deformed by the influence of the laser beam (12) and the deformation is detected with sensors, preferably with strain gages.

2. The method according to claim 1, wherein the position of the laser beam (12) is detected with the measuring body (23, 23.1, 23.2) on the processing head (13) and/or on at least one of the deflecting elements (21, 23.1) and/or on at least one of the transmissive elements, preferably a lens or a window (22, 23.2).

3. The method according to claim 1 or claim 2, wherein the position of the laser beam (12) is detected at two extreme positions of the processing head (13) with respect to the axis of movement (16.1, 16.2, 16.3).

4. The method according to any one of the preceding claims, wherein the position of the laser beam (12) and/or the deviation (24) between the direction of the respective axis of movement and the direction of the laser beam (12) in the section of the beam path is stored and/or recorded.

5. The method according to any one of the preceding claims, wherein the adjustable deflecting element (21, 23.1) is cardanically mounted.

6. The method according to claim 5, wherein the adjustable deflecting element (21, 23.1) is adjusted with mechanical adjusting means (36) and/or with actuators (31).

7. The method according to any one of the preceding claims, wherein the deviation is determined in an evaluation unit (34) and the evaluation unit (34) outputs values for the correction of the adjustable deflecting element (21, 23.1).

8. The method according to any one of the preceding claims, wherein the evaluation unit (34) outputs the determined correction values to a control (35) and the adjustable deflecting element (21, 23.1) is automatically corrected by the control (35) in such a manner that the deviation (24) falls below the predetermined value.

9. The method according to any one of the preceding claims, wherein the laser processing system (10) is adjusted during a final inspection, and/or a start-up, and/or a periodic check and/or prior to or during the processing of a workpiece (14).

## Revendications

1. Procédé pour régler une trajectoire de faisceau d'une installation d'usinage par laser (10), l'installation d'usinage par laser (10) comprenant
- au moins une source laser (11),
- une tête d'usinage (13), qui peut être déplacée le long d'au moins un axe de déplacement (16.1, 16.2, 16.3), et
- au moins un élément de déviation (21, 23.1) réglable, qui guide un faisceau laser (12) depuis la source laser (11) vers la tête d'usinage (13),
et le procédé comportant les étapes suivantes:
modification de la position de la tête d'usinage (13) le long de l'axe de déplacement (16.1, 16.2, 16.3) respectif par rapport à au moins un élément de déviation (21, 23.1) réglable,
au moins un corps de mesure (23, 23.1, 23.2) étant disposé dans une partie du faisceau de façon fixe par rapport à la tête d'usinage (13) et la position respective du faisceau laser (12) par rapport au corps de mesure (23, 23.1, 23.2) étant enregistrée pour au moins deux positions de la tête d'usinage (13) et
un écart (24) entre une direction de l'axe de déplacement (16.1, 16.2, 16.3) respectif et la direction du faisceau laser (12) dans une partie du faisceau laser étant déterminé à partir des positions enregistrées du faisceau laser (12);
réglage du au moins un élément de déviation (21, 23.1) réglable de telle sorte que l'écart (24) est inférieur à une valeur prédéfinie, **caractérisé en ce que**
le corps de mesure (23, 23.1, 23.2) est déformé par l'effet du faisceau laser (12) et la déformation (37) est enregistrée avec des capteurs (30), de préférence avec des extensomètres à résistance.

2. Procédé selon la revendication 1, la position du faisceau laser (12) étant enregistrée avec le corps de mesure (23, 23.1, 23.2) sur la tête d'usinage (13) et/ou sur au moins l'un des éléments de déviation (21, 23.1) et/ou sur au moins l'un des éléments transmissifs, de préférence une lentille ou une fenêtre (22, 23.2).

3. Procédé selon l'une quelconque des revendications 1 ou 2, la position du faisceau laser (12) sur deux positions extrêmes de la tête d'usinage (13) par rapport à l'axe de déplacement (16.1, 16.2, 16.3) étant enregistrée.

4. Procédé selon l'une quelconque des revendications précédentes, la position du faisceau laser (12) et/ou l'écart (24) entre la direction de l'axe de déplacement respectif et la direction du faisceau laser (12) dans la partie de la trajectoire du faisceau étant mémorisée et/ou enregistrée.

5. Procédé selon l'une quelconque des revendications précédentes, l'élément de déviation (21, 23.1) réglable étant monté sur cardan.

6. Procédé selon la revendication 5, l'élément de déviation (21, 23.1) réglable étant réglé avec des moyens de réglage (36) mécaniques et/ou avec des actionneurs (31).

7. Procédé selon l'une quelconque des revendications précédentes, l'écart (24) étant déterminé dans une unité d'analyse (34) et l'unité d'analyse (34) délivrant des valeurs pour la correction de l'élément de déviation (21, 23.1) réglable.

8. Procédé selon l'une quelconque des revendications précédentes, l'unité d'analyse (34) envoyant les valeurs de correction déterminées à une commande (35) et l'élément de déviation (21, 23.1) réglable étant corrigé automatiquement par la commande (35) de telle sorte que l'écart (24) est inférieur à la valeur prédéfinie.

9. Procédé selon l'une quelconque des revendications précédentes, l'installation d'usinage par laser (10) étant réglée pendant un contrôle final et/ou une mise en service et/ou un test périodique et/ou avant ou après l'usinage d'une pièce (14).
